# EUROPEAN PATENT APPLICATION

(11) **EP 2 747 189 A1**
(43) Date of publication of application: **25.06.2014**
(21) Application number: 13172391.8
(22) Date of filing: 18.06.2013
(51) Int. Cl.: H01M 10/42, H01M 10/48, H01M 10/052, H01M 2/30, H01M 2/04, H01M 10/04

(54) **Battery pack**

(30) Priority: 21.12.2012 US 201261745287 P; 15.05.2013 US 201313895326
(71) Applicant: Samsung SDI Co., Ltd., Gyeonggi-do 449-577 (KR)
(72) Inventor: Koh, Seok, Yongin-si Gyeonggi-do (KR)
(74) Representative: Gulde & Partner

(57) **Abstract**

Provided is a battery pack. The battery pack includes a bare cell enclosed by a cap plate, and a protective circuit module disposed on the cap plate, wherein the protective circuit module includes a first PCB and a second PCB disposed on the first PCB. According to an embodiment of the present invention, a battery pack enabling a simplified structure of a protective circuit module for controlling charging and discharging operations, and simplified manufacturing processes of the structure is provided.

## Description

### [Technical Field]

The present invention relates to a battery pack.

### [Background Art]

As technology of mobile devices such as cellular phones and notebook computers has been remarkably developed and production thereof has increased, the demand for secondary batteries as an energy source for mobile devices is rapidly increased. Recently, much research into secondary batteries as an alternative energy resource for fossil fuel used in electric vehicles and hybrid electric vehicles has been conducted.

Such secondary batteries are used in the form of a battery pack integrated with a circuit for controlling charging and discharging operations. In order to secure stability of secondary batteries including flammable materials, the battery pack has a circuit efficiently controlling abnormal operating environment of overcharging, overdischarging, overcurrent, or the like.

### [Detailed Description of the Invention]

### [Technical Problem]

The present invention provides a battery pack, wherein a structure of a protective circuit module for controlling charging and discharging operations, and manufacturing processes of the structure are simplified.

### [Technical Solution]

According to an aspect of the present invention, there is provided a battery pack (also referred to as rechargeable battery) may include a bare cell enclosed by a cap plate and a protective circuit module (PCM) disposed on the cap plate, wherein the PCM includes a first printed circuit board (PCB) and a second PCB disposed on the first PCB.

For example, the second PCB may provide an external connection terminal that allows electrical connection with an external device.

For example, the first and second PCBs may be electrically connected to each other by disposing soldering materials.

For example, the first PCB may include a first surface facing the cap plate and a second surface opposite to the first surface, and the second PCB may be disposed on the second surface.

For example, a positive temperature coefficient (PTC) device may also be disposed on the second surface.

For example, the second PCB may include an insulating substrate; a first conductive pattern formed on a first surface of the insulating substrate; a second conductive pattern formed on a second surface of the insulating substrate; and a connection pattern, which is extended to penetrate the insulating substrate to electrically connect the first and second conductive patterns.

For example, the connection pattern may include a conductive filler filling via holes that penetrate the insulating substrate.

For example, the first and second conductive patterns may include a plurality of terminals, which are individualized to insulate one another.

For example, an insulating coating layer may be formed between the first and second conductive patterns.

For example, the terminals of the first conductive pattern may be formed at locations corresponding to the terminals of the second conductive pattern. This means that a projection of the terminals of the first conductive pattern to the plane in which the terminals of the second conductive pattern are located (along a perpendicular axis) partially (preferably completely) overlap with the terminals of the second conductive pattern.

For example, each of the first and second conductive patterns may include a first power terminal, a second power terminal, and a signal transmitting terminal.

For example, the first and second conductive patterns may include a seed layer formed on the insulating substrate and a plating layer formed on the seed layer.

For example, the seed layer and the plating layer may be formed of different metal materials.

For example, the seed layer may be formed of the same metal material with the connection pattern.

For example, the battery pack may further include an upper cover that is assembled on the cap plate, wherein an accommodation portion that accommodates the PCM is formed on the upper cover.

For example, assembly openings, where assembly ribs of the upper cover are to be inserted, may be formed in the first PCB.

For example, each of the assembly openings may be defined by a leading-in concave shape on side-wall of the first PCB.

For example, many of the assembly openings may be formed along a longitudinal side of the first PCB.

For example, the assembly ribs may be formed on side-walls of the upper cover facing the accommodation portion.

For example, the assembly ribs may be formed protruding in a direction toward the accommodation portion.

For example, many of the assembly ribs may be formed along the longitudinal side-walls of the upper cover.

For example, binding protrusions protruding in a direction toward the cap plate may be formed on the upper cover.

For example, binding grooves to which the binding protrusions are to be pressed may be formed in the cap plate.

For example, the binding protrusions may penetrate a lead member of the first PCB and may be pressed into the binding grooves.

According to another aspect of the present invention, there is provided a rechargeable battery comprising: a bare cell, a housing adapted for enclosing the bare cell; and a protective circuit module disposed between the bare cell and the housing, and comprising a first printed circuit board which includes at least one electrical device, wherein a second printed circuit board is disposed between the first printed circuit board and a side of the housing at which the first printed circuit board is located. Preferably, the housing which encloses the bare cell comprises at least a first side and a second side, wherein the first printed circuit board and the second printed circuit board are both located at the first side of the housing. Preferably, the first side the housing comprises a planar outer surface.

Preferably, the first printed circuit board and the second printed circuit board are electrically connected to each other by a soldering joint. Preferably, the second printed circuit board and the first printed circuit board directly contact the soldering joint.

Preferably, the housing comprises a case, a cap plate and an upper cover having an accommodation portion adapted to accommodate the protective circuit module, wherein the bare cell is accommodated inside a space which is formed by the case and the cap plate, and the protective circuit module is arranged between the cap plate and the upper cover. Preferably, the case is formed by a can, and more preferably, the case is formed by a metal can.

Preferably, the second printed circuit board comprises an external connection terminal that allows electrical connection with an external device.

Preferably, the second printed circuit board comprises an insulating substrate; a first conductive pattern formed on a first surface of the insulating substrate and a second conductive pattern formed on a second surface of the insulating substrate. Preferably, the second printed circuit board comprises a connection pattern which is formed in via holes of the insulating substrate, wherein the connection pattern electrically connects the first conductive pattern and second conductive pattern.

Preferably, the first conductive pattern protrudes from the first surface of the insulating substrate and an insulating coating layer is formed between adjacent protrusions of the first conductive pattern. Preferably, the second conductive pattern protrudes from the second surface of the insulating substrate and an insulating coating layer is formed between adjacent protrusions of the second conductive pattern. Preferably, the first conductive pattern is formed in a regular pattern arrangement.

Preferably, the second conductive pattern is formed in a regular pattern arrangement.

Preferably, the first conductive pattern and the insulating coating layer form a planar outer surface on the first surface of the insulating substrate. Preferably, the second conductive pattern and the insulating coating layer form a planar outer surface on the second surface of the insulating substrate.

Preferably, the first printed circuit board comprises an insulation substrate on which the at least one electrical device is located, and an insulation layer formed of a insulating material is arranged between the cap plate and the insulating substrate of the first printed circuit board. Preferably, the insulation layer is formed as an insulation tape.

Preferably, the insulating substrate of the first printed circuit board is formed of a flexible material. Preferably, the insulating substrate of the second printed circuit board is formed of a flexible material. Preferably, the flexible material is a flexible resin material.

Preferably, the first conductive pattern comprises at least a first metal layer and a second metal layer that are stacked on each other. Preferably, the first metal layer and the second metal layer are formed of different materials. Preferably the first metal layer is formed of copper. Preferably the second metal layer is formed of gold. Preferably, the second conductive pattern comprises at least a first metal layer and a second metal layer that are stacked on each other. Preferably, the first metal layer and the second metal layer are formed of different materials. Preferably the first metal layer is formed of copper. Preferably the second metal layer is formed of gold. Preferably, the first metal layer is formed of the same material as the connection pattern.

Preferably, the first printed circuit board is a single-sided printed circuit board. Preferably, all functional components such as transistors, capacitors and the like are located only on one side of the first printed circuit board.

Preferably, the second printed circuit board is a double-sided printed circuit board which comprises a conductive pattern on both surfaces of the printed circuit board. Preferably, the functional components of the second printed circuit board such as transistors, capacitors and the like are located on both sides of the second printed circuit board.

Preferably, the conductive pattern of the second printed circuit board protrudes with a first height from the insulation substrate of the first printed circuit board, wherein the first height is greater than a second height which is a maximum protrusion distance of the at least one electrical device from the insulation substrate of the first printed circuit board. Preferably, a difference between the first height and the second height is greater than 10%, more preferably greater than 20% and still more preferably greater than 30% of the first height. Furthermore it is preferred that a difference between the first height and the second height is smaller than 200%, more preferably smaller than 150% and still more preferably smaller than 100% of the first height. Accordingly it is possible to obtain sufficient protection for the electrical devices located on the first printed circuit board due to a safety difference between the first height and the second height while simultaneously allowing a space between the first printed circuit board and the cap plate to be reduced.

Preferably, the upper cover comprises at least one assembly rib and the protective circuit module comprises at least one assembly opening, wherein the at least one assembly rib protrudes towards the protective circuit module and the at least one assembly rib is inserted in the at least one assembly opening.

Preferably, the upper cover comprises at least one binding protrusion and the bare cell comprises at least one binding groove, wherein the at least one binding protrusion is inserted in the at least one binding groove.

Preferably, the protective circuit module is adapted to control charging and discharging operations of the electrode assembly.

Preferably, the at least one electrical device is selected from the group of charging/discharging switching device, capacitor, resistor and a positive temperature coefficient device. Preferably, the insulation layer is a double-sided adhesive tape.

A printed circuit board (also referred to as PCB), is adapted to mechanically support and electrically connect electronic components using conductive pathways, tracks or signal traces laminated onto a non-conductive substrate.

### [Effects of the Invention]

According to an aspect of the present invention, a battery pack enables a structure of a protective circuit module for controlling charging and discharging operations and manufacturing processes of the structure to be simplified.

### [Description of the Drawings]

FIG. 1 is an exploded perspective view of a battery pack according to an embodiment of the present invention;
FIG. 2 illustrates a side structure of the battery pack of FIG. 2;
FIG. 3 is a perspective view that magnifies a second printed circuit board (PCB) of FIG. 1;
FIG. 4 is a cross-sectional view of the second PCB of FIG. 1;
FIG. 5 is a perspective view of an external connection terminal as an example for comparison with the embodiment of the present invention;
FIGS. 6A through 6F are cross-sectional views illustrating stepwise processes of a method of manufacturing the second PCB according to an embodiment of the present invention;
FIG. 7 is a perspective view illustrating an assembled status of an upper cover and a protective circuit module;
FIG. 8 is a perspective view of the upper cover of FIG. 7.
FIG. 9 is a cross-sectional view of a battery pack of FIG. 7.

### [Best Mode]

Hereinafter, a battery pack according to exemplary embodiments of the present invention will be described in greater detail with reference to the attached drawings.

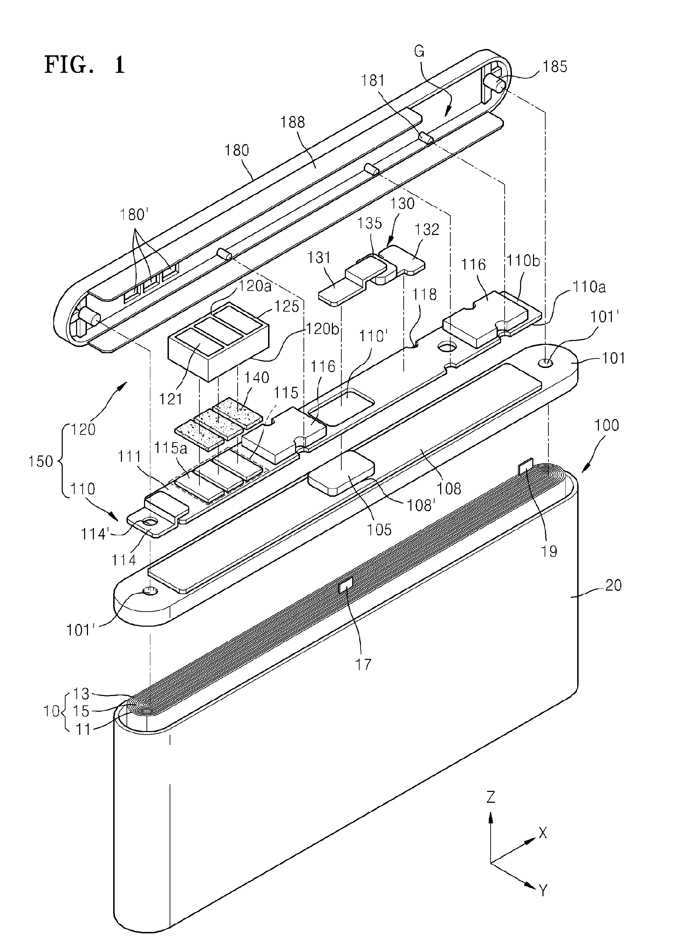

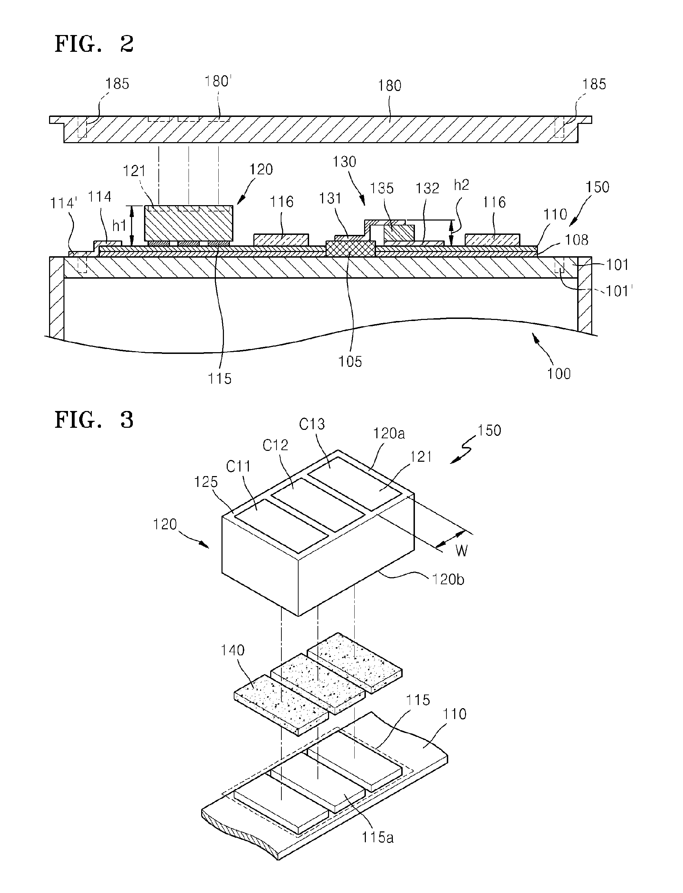

FIG. 1 illustrates an exploded perspective view of a battery pack according to an embodiment of the present invention. FIG. 2 illustrates a side view of the battery pack illustrated in FIG. 1.

Referring to FIGS. 1 and 2, the battery pack includes a bare cell 100 and a protective circuit module (PCM) 150 mounted on the bare cell 100 and controlling charging and discharging operations.

The bare cell 100 is a rechargeable secondary battery, e.g., a lithium-ion battery. The bare cell 100 may be prepared by sealing an electrode assembly 10 including a cathode plate 11, an anode plate 13, and a separator 15 with an electrolyte (not shown) in a can 20. For example, the bare cell 100 includes an electrode assembly 10 including a stack of a cathode plate 11, an anode plate 13, and a separator 15 and jellyroll wound, a can 20 having an opening at the upper end to accommodate the electrode assembly 10 and an electrolyte, and a cap plate 101 sealing the opening of the upper end of the can 20. The cap plate 101 and the can 20 may be airtight-coupled by welding the contact portion thereof using a laser beam.

At least a part of the cathode plate 11 and the anode plate 13 may be connected to the cathode tab 19 and the anode tab 17, respectively. For example, the cathode tab 19 may be connected to the cap plate 101 itself, and the anode tab 17 may be connected to the electrode terminal 105 withdrawn to the upper surface of the cap plate 101. The electrode terminal 105 forms insulating bond with the cap plate 101 and protrudes upward through the upper surface of the cap plate 101.

The PCM 150 controls charging and discharging operations of the bare cell 100. Also, when an over current equal to or higher than a threshold current is flowed in the battery, when a temperature of the bare cell 100 increases to a predetermined temperature or higher, or when the battery is over-charged or over-discharged, the PCM 150 cuts off a current flow and performs a protective operation to protect the bare cell 100. For example, the PCM 150 may include: a first printed circuit board (PCB) 110 having a sensing circuit (not shown) for detecting status information, such as a current or voltage, or a charge and discharge protective circuit (not shown); a positive temperature coefficient (PTC) device 130 mounted on the first PCB 110 and limits a charging and discharging current as temperature rises; and a second PCB 120 mounted on the first PCB 110. The first PCB 110 may include a plurality of electrical devices 116, i.e., charging/discharging switching devices (e.g., FET), capacitors, or resistors.

The PTC device 130 forms a current path between the electrode terminal 105 and the first PCB 110 of the cap plate 101. When a temperature of the bare cell 100 exceeds a predetermined threshold, an electric resistance may increase, and thus the PCT device 130 acts to reduce a charging and discharging current in compulsion. For example, the PTC device 130 may include a variable resistance 135 and first and second lead members 131 and 132 that are each connected to one of upper and lower surfaces of the variable resistance 135 and extended in opposite directions from each other. For example, the first lead member 131 is connected to the electrode terminal 105 protruding through the first PCB 110, while the second lead member 132 is connected to an upper surface of the first PCB 110.

In the first PCB 110, a terminal hole 110' is formed to expose the electrode terminal 105. For example, the terminal hole 110' may be formed in a center region of the first PCB 110. For example, the electrode terminal 105 exposed through the terminal hole 110' is connected to the PTC device 130, and more particularly, to the first lead member 131 of the PCT device 130. According to an embodiment of the present invention, the electrode terminal 105 and the PTC device 130 may be welded, and the electrode terminal 105 exposed through the terminal hole 110' and the first lead member 131 may be welded overlapping each other. The PCT device 130 may be disposed on a charging/discharging pathway between the electrode terminal 105 and the first PCB 110, and may electrically connect the anode tab 17 of the bare cell 100 and the first PCB 110 to each other, wherein the anode tab 17 is connected to the electrode terminal 105.

An insulation tape 108 may be interposed between the first PCB 110 and the cap plate 101. The insulation tape 108 may mediate adhesion between the first PCB 110 and the cap plate 101. For example, the insulation tape 108 may be fixed on the cap plate 101 to face the first PCB 110. Also, the insulation tape 108 may be applied on a whole area of a first surface 110a of the first PCB 110, or may be applied as divided into two or more parts on a selected part of the first surface 110a. A terminal hole 108' for exposing the electrode terminal 105 may be formed in the insulation tape 108. The insulation tape 108 may be formed of a insulating material for electrical insulation between the cap plate 101 and the first PCB 110, and may be a double-sided tape.

The second PCB 120 is disposed on the first PCB 110. The second PCB 120 may be electrically connected with the first PCB 110 by interposing soldering materials 140 therebetween. The first and second PCBs 110 and 120 may be formed of a flexible printed circuit board (FPCB). For example, the first and second PCBs 110 and 120 may be, each respectively, formed of insulating substrates 111 and 125, wherein a conductive pattern 121 is formed on at least one surface of each of the insulating substrates 111 and 125. Here, the insulating substrate 111 and 125 may be formed of a flexible resin material to provide flexibility to the first and second PCBs 110 and 120. The conductive pattern 121 of the first or second PCB 110 or 120 may act as a wiring that mediates a current or flow of a signal, and the electrical devices 116 may be mounted on the first and second PCBs 110 and 120. According to an embodiment of the present invention, the first and second PCBs 110 and 120 may include the insulating substrates 111 and 125 formed with the same material, for example, the insulating substrates 111 and 125 of a FR-4 resin.

The first PCB 110 may be formed of a single-sided PCB, which has a conductive pattern (not shown) is formed on one side of the PCB. The first PCB 110 may include the first surface 110a facing the cap plate 101, and a second surface 110b opposite to the first surface 110a. Also, the second PCB 120 that is connected to the first PCB 110, the PTC device130, and the like are all formed on the second surface 110b, and thus the first PCB 110 may be formed of a single-sided PCB of which the conductive pattern (not shown) is selectively formed on the second surface 110b only.

The second PCB 120 may be formed of a double-sided PCB, which has the conductive pattern 121 formed on both surfaces of the PCB. The second PCB 120 may include a first surface 120a exposed upwardly and a second surface downwardly-facing the first PCB 110. The second PCB 120 may be connected to an external device (not shown) through the first surface 120a that is upwardly exposed, and may be connected to the first PCB 110 through the second surface 120b, thus the second PCB 120 may be formed of a double-sided PCB of which the conductive pattern 121 is formed on both the first and second surfaces 120a and 120b.

According to an embodiment of the present invention, the second PCB 120 may act as an external connection terminal that allows electrical connection between the second PCB 120 and the external device (not shown). In particular, the second PCB 120 forms an interface with an external device (ex. a mobile device) or an external power supply equipment and mediates flow of a current or transmitting and receiving a signal. In this regard, the second PCB 120 may be mounted on a terminal region 115 of the first PCB 110, and may mediate the current or signal flow inputs or outputs through the terminal region 115 of the first PCB 110.

FIG. 3 illustrates a perspective view that magnifies the second PCB 120 shown in FIG. 1. Referring to FIG. 3, the second PCB 120 may include a plurality of terminals C11, C12, and C13 that are patterned to be individualized from one another. For example, the plurality of terminals C11, C12, and C13 may be formed on the insulating substrate 125 and may be electrically insulated from one another.

In particular, the second PCB 120 may include a first power terminal C11, a second power terminal C13, and a signal transmitting terminal C12 formed between the first and second power terminals C11 and C13. The first and second power terminals C11 and C13 may each be formed of a cathode or anode terminal, and the first and second power terminals C11 and C13 form an electrical interface with an external device for input and output of a charging and discharging current.

According to an embodiment of the present invention, a number and a type of the terminals of the second PCB 120 may vary, such as the first and second power terminals C11 and C13 may form a charging/discharging integrated terminal, or a terminal for charging and a terminal for discharging may be separated, and depending on a polarity, the a terminal for charging and a terminal for discharging may either be integrated or separated.

The signal transmitting terminal C12 may be interposed between the first and second power terminals C11 and C13 and forms an electrical interface for data communication with the external device (not shown). The signal transmitting terminal C12 may receive a control signal about a charging/discharging operation from the external device (not shown) or may transmit status information, such as a voltage, a current, or a temperature that are measured inside a battery, to the external device. The signal transmitting terminal C12 forms a data transmission line with the external device, and if necessary, the data transmission line may be provided in plural lines.

Referring to FIG. 3, the terminals C11, C12, and C13 of the second PCB 120 may be formed having a same width w. According to another embodiment of the present invention, the first and second power terminals C11 and C13 may form a power transmission line and may be formed with a relatively wide width to prevent power loss due to a self resistance. In addition, the signal transmitting terminal C12 forms a signal transmission line and may be formed with a relatively narrow width in terms of saving a mounting space of the second PCB 120.

Referring to FIG. 2, the second PCB 120 is mounted on the first PCB 110, and the conductive pattern 121 of the second PCB 120 may protrude with a first height h1 from a surface of the first PCB 110. For example, an upper cover 180 is assembled onto the PCM 150, and the PCM 150 may be packed as the upper cover 180 accommodates the PCM 150 and binds to the bare cell 100. Here, the conductive pattern 121 of the second PCB 120 protruding at the first height h1 from the first PCB 110 may be easily exposed to the outside through an open pattern 180' of the upper cover 180 and may maintain a stable connection status with the external device (not shown). For example, the conductive pattern 121 of the second PCB 120 is set to be higher than a second height h2 of the PTC device 130 that is mounted on the first PCB 110, so as to be electrically connected to the external device (not shown) through the open pattern 180' formed on the upper cover 180. A structure of the second PCB will be described later in detail

Referring to FIG. 1, a thin layer of the insulation tape 108 is only interposed between the first PCB 110 and the cap plate 101, and space for accommodating other elements than the insulation tape 108 is not required. Accordingly, space between the first PCB 110 and the cap plate 101 may be reduced, and thus compactification of a battery pack is possible. In other words, the insulation tape 108 is disposed on the first surface 110a of the first PCB 110 facing the cap plate 101, and the PTC device 130 and the second PCB 120 are disposed on the second surface 110b, which is opposite to the first surface 110a, and thus slimming and compacting the battery pack may be possible. Also, as the elements of the PCM 150 are assembled tightly with minimum margin, an assembling strength is increased, and thus impact resistance of the battery pack with respect to dropping impact may be improved.

A connection member 114 may be disposed on the first PCB 110 for electrical connection with the bare cell 100. For example, the connection member 114 may be disposed at an edge of the first PCB 110. As shown in FIG. 2, the connection member 114 may be extended from one longitudinal end of the first PCB 110 to on a top of the cap plate 101. For example, the connection member 114 may have a stair-like shape including an upper part that is connected to a top of the second surface 110b of the first PCB 110 and a lower part that is extended to be in contact with the top of the cap plate 101. According to an embodiment of the present invention, the connection member 114 may electrically connect the first PCB 110 and the cap plate 101 and may be connected to the cathode plate 11 (via the cathode tab 19) of the bare cell 100 through the cap plate 101. Meanwhile, the connection member 114 may be formed in a predetermined shape using a nickel thin plate.

The connection member 114 may be integrated with the first PCB 110, and then may be welding-fixed on the cap plate 101. For example, the first PCB 110 may be integrated with the connection member 114 and the PTC device 130, followed by being welded to the cap plate 101 and the electrode terminal 105, and thus may be fixed on the cap plate 101.

A through-hole 114' may be formed in the connection member 114. The through-hole 114' is formed to insert one of binding protrusions 185 of the upper cover 180. The one of the binding protrusions 185 of the upper cover 180 may be inserted into one of binding grooves 101' of the cap plate 101 via the through-hole 114' of the connection member 114. As it will be described later, the upper cover 180 and the bare cell 100 may be bound to each other as the one of the binding protrusions 185 of the upper cover 180 is inserted to the one of the binding grooves 101' of the cap plate 101.

The upper cover 180 is assembled onto the PCM 150 mounted on the bare cell 100 so as to accommodate the PCM 150. In this regard, an accommodation portion G having a concave shape to accommodate the PCM 150 may be provided in the upper cover 180. In the upper cover 180, an open pattern 180' for exposing the conductive pattern 121 (or the terminals C11, C12, and C13) of the second PCB 120 and allowing connection with the external device (not shown) may be formed. Meanwhile, an insulating label sheet (not shown) may be wound attached around an external surface area of the bare cell 100.

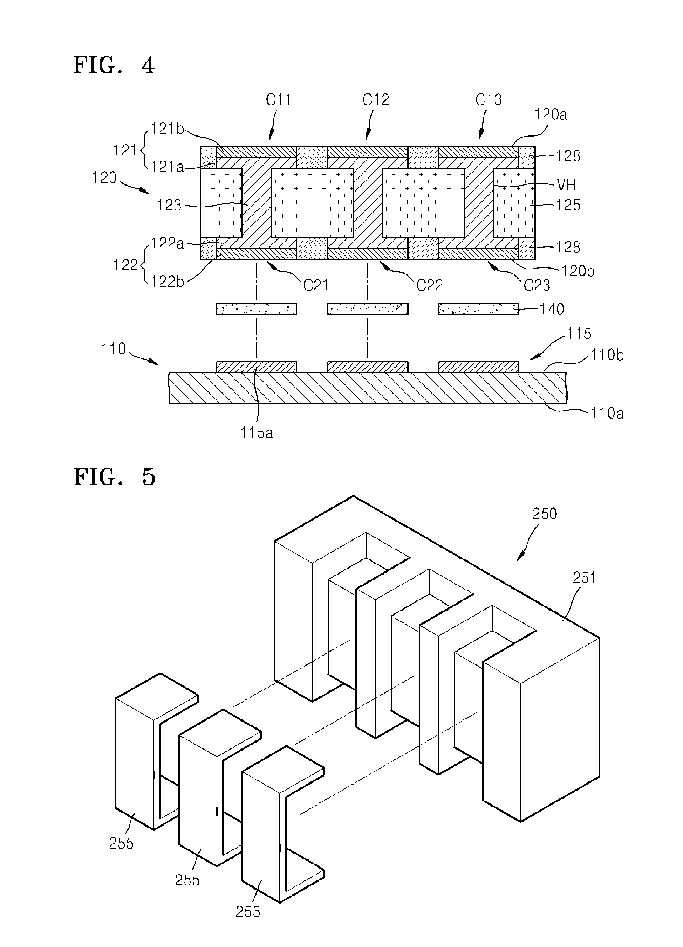

FIG. 4 illustrates a cross-sectional structure of the second PCB 120 illustrated in FIG. 1. Hereinafter, the second PCB 120 according to an embodiment of the present invention will be described with reference to FIG. 4.

Referring to FIG. 4, the second PCB 120 may be formed as a double-sided PCB. The second PCB 120 formed of a double-sided PCB has a stacked structure including first and second conductive patterns 121 and 122 formed on the first and second surfaces 120a and 120b at both sides of the insulating substrate 125, wherein the first and second conductive patterns 121 and 122 are interconnected through a connection pattern 123 formed through the insulating substrate 125.

In particular, the second PCB 120 may include the insulating substrate 125, the first and second conductive patterns 121 and 122 formed on the first and second surfaces 120a and 120b opposite to each other of the insulating substrate 125, and the connection pattern 123 that electrically connect the first and second conductive patterns 121 and 122.

The insulating substrate 125 forms a skeleton of the second PCB 120 and may be formed of an insulating material to inter-insulate the first and second conductive patterns 121 and 122 that are patterned on the insulating substrate 125. For example, the insulating substrate 125 may be formed of a FR-4 material.

The first conductive pattern 121 is patterned on the first surface 120a upwardly facing opposite to the first PCB 110 and may include, for example, the plurality of terminals C11, C12, and C13. The terminals C11, C12, and C13 of the first conductive pattern 121 are patterned to be individualized at each separate location and may be electrically insulated to each other. For example, the first conductive pattern 121 may include the first and second terminals C11 and C13 and the signal transmitting terminal C12. Meanwhile, the first conductive pattern 121 may form an electrical interface with the external device (not shown) for input and output of a charging and discharging current.

The second conductive pattern 122 is patterned on the second surface 120b facing the first PCB 110 and may include a plurality of terminals C21, C22, and C23 at locations corresponding to the first conductive pattern 121. For example, the second conductive pattern 122 may include first and second power terminals C21 and C23 and a signal transmitting terminal C22 corresponding to the first conductive pattern 121. The first and second power terminals C21 and C23 and the signal transmitting terminal C22 of the second conductive pattern 122 may each respectively be formed and electrically connected at the locations corresponding to the first and second power terminals C11 and C13 and the signal transmitting terminal C12 of the first conductive pattern 121. Meanwhile, the second conductive pattern 122 forms an electrical interface with the terminal region 115 of the first PCB 110 or a plurality of electrode pads 115a formed on the terminal region 115.

The first and second conductive patterns 121 and 122 may include the terminals C11, C12, C13, C21, C22, and C23 formed at the corresponding locations on the first and second surfaces 120a and 120b. The terminals C11, C12, C13, C21, C22, and C23 of the first and second conductive patterns 121 and 122 may be electrically connected through the connection pattern 123 of the shortest distance by being formed on the corresponding locations.

An insulating coating layer 128 may be formed between the terminals C11, C12, and C13 of the first conductive patterns 121 and between the terminals C21, C22, and C23 of the second conductive pattern 122. The insulating coating layer 128 fills gaps between the terminals C11, C12, C13, C21, C22, and C23 and may be interposed between the terminals C11, C12, C13, C21, C22, and C23 to ensure insulation between the terminals C11, C12, C13, C21, C22, and C23 so that they are not electrically connected to one another. For example, the insulating coating layer 128 may be coated on the insulating substrate 125 by patterned printing such as screen printing.

The first and second conductive patterns 121 and 122 may include at least two metal layers 121 a and 121b or 122a and 122b that are stacked on each other. For example, the first conductive pattern 121 may include a seed layer121a formed in the first surface 120a of the insulating substrate 125 and a plating layer 121 b formed on the seed layer 121 a, and similarly, the second conductive pattern 122 may include a seed layer 122a formed in the second surface120b of the insulating substrate 125 and a plating layer 122b formed on the seed layer 122a.

The seed layer 121 a or 122a may perform as an electrode in an electroplating process and may serve as an under layer for the electroplating process. The plating layer 121 b or 122b may be formed via the electroplating process and may be formed on the seed layer 121 a or 122a.

The seed layer 121 a or 122a and the plating layer 121 b or 122b may be formed of different metals from each other, and a metal material with a high affinity for each other may be used. For example, the seed layer 121 a or 122a may include a copper material, and the plating layer 121 b or 122b may include a gold material.

The first and second conductive patterns 121 and 122 each respectively patterned on the first and second surfaces 120a and 120b of the insulating substrate 125 are electrically connected to each other through the connection pattern 123. The connection pattern 123 according to an embodiment of the present invention may include a conductive filler 123 that is formed to fill via holes VH through the insulating substrate125. That is, the via holes VH penetrating through the insulating substrate 125 are patterned in several parts of the insulating substrate 125, and as the conductive filler 123 is formed to fill the via holes VH, the first and second conductive patterns 121 and 122 may be electrically connected to each other. For example, the conductive filler123 may be formed of a metal material having an excellent conductivity such as copper, silver, or gold.

Referring to FIG. 4, the second PCB 120 is disposed on the first PCB 110 and may face the terminal region 115 of the first PCB 110. Also, the second PCB 120 may be attached with the terminal region 115 of the first PCB 110 to ensure communication therebetween. For example, the plurality of electrode pads 115a may be formed on the terminal region 115 of the first PCB 110. In particular, the plurality of electrode pads 115a may be formed on the terminal region 115 of the first PCB 110 at locations corresponding to the terminals C21, C22, and C23 of the second PCB 120 terminal. The electrode pads 115a of the first PCB 110 and the terminals C21, C22, and C23 of the second PCB 120 terminal located at corresponding locations may be electrically connected by having the soldering materials 140 as a medium. For example, connecting the first and second PCBs 110 and 120 may include disposing the soldering materials between the first and second PCBs 110 and 120, high-temperature heating, and applying reflow soldering so that the melted or semi-melted soldering materials attach the first and second PCBs 110 and 120. The first and second PCBs 110 and 120 may be integrated by the reflow soldering.

In the reflow soldering, attaching the plurality of electrical devices 116 (see FIG. 1) mounted on the first PCB 110 may be simultaneously performed. For example, the plurality of electrical devices 116 may be mounted on the first PCB 110, that is, devices such as charging/discharging switching devices (e.g., FET), capacitors, or resistors may be mounted on the first PCB 110. Here, the electrical devices 116 may be disposed on the first PCB 110, the soldering materials 140 may be disposed between pads of the first PCB 110 at locations corresponding to the electrical devices 116 and the electrical devices 116, and then the first PCB 110 and the electrical devices 116 may be attached through one soldering process. This means that a projection of the soldering materials 140 to the plane in which the electrical devices 116 are located (along a perpendicular axis) partially (preferably completely) overlap with the electrical devices 116. At the same time, attaching the first and second PCBs 110 and 120 may be simultaneously performed at once.

FIG. 5 illustrates a perspective view of an external connection terminal 250 as an example for comparison with the embodiment of the present invention. Referring to FIG. 5, the external connection terminal 250 may include metal output terminals 255 and a terminal holder 251 that fixes the metal output terminals 255 at regular locations in order to mediate electrical connection between a bare cell and an external device, and the external connection terminal 250 may be formed by insert injection. The insert injection may involve molding the output terminals 255, fix-locating the molded output terminals 255 at regulated locations in a mold, and injecting a resin for the terminal holder 251, and thus the insert injection requires a strict process control and its manufacturability may be reduced due to increased manufacture cost as processes of the insert injection are complicated.

The complicated processes in the insert injection are not necessary for the battery pack of the present invention since the second PCB 120 providing the external connection terminal is formed as a double-sided PCB. Also, connecting the first and second PCBs 110 and 120 may be performed at the same time when the first PCB 110 and the electrical devices 116 are attached after disposing the second PCB 120 on the first PCB 110, and thus a number of processes and its manufacture cost may be reduced.

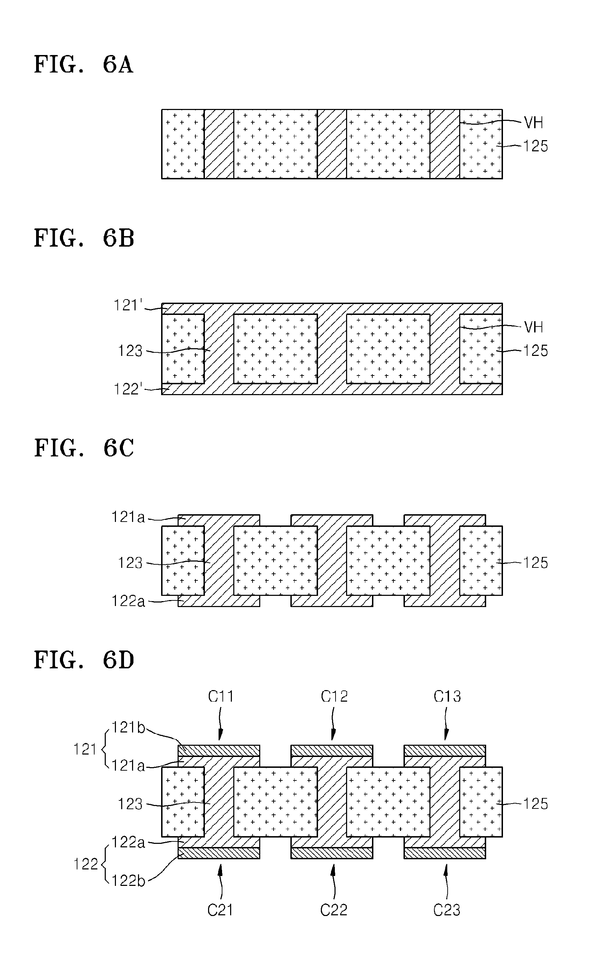

FIGS. 6A through 6F illustrate stepwise processes of a method of preparing the second PCB 120 according to an embodiment of the present invention. First, as shown in FIG. 6A, the insulating substrate 125 is prepared. The insulating substrate 125 may be formed of an insulating resin, e.g., a FR-4 material. The via holes VH may be formed on the several parts of the insulating substrate 125 and may be formed in an appropriate shape by injection molding.

Next, as shown in FIG. 6B, the conductive filler 123 may be filled in the via holes VH of the insulating substrate 125, and each of first and second conductive layers 121' and 122' is formed on the first and second surfaces of the insulating substrate 125, respectively. The conductive filler 123 and the first and second conductive layers 121' and 122' are integrated and thus may be electrically connected. For example, the conductive filler 123 and the first and second conductive layers 121' and 122' may be formed at once through one process, or each of them may be formed through a separate process. For example, the conductive filler 123 and the first and second conductive layers 121' and 122' may be formed with the same material, e.g., a copper material.

Next, as shown in FIG. 6C, the first and second conductive layers 121' and 122' are patterned. For example, the seed layers 121 a and 122a, which are individualized from each other, may be formed by removing regions between terminals of the first and second conductive layers 121' and 122'. The patterning process may include various patternizing processes, such as lithography.

Next, as shown in FIG. 6D, the first and second conductive patterns 121 and 122 may be formed by performing electroplating. The electroplating including the seed layers 121 a and 122a patterned on the first and second surfaces of the insulating substrate125 as one electrode and a plating material as another electrode may be performed, and thus the plating layers 121b and 122b may be formed on the seed layers 121 a and 122a. The plating layers 121b and 122b may be patterned along the seed layers 121 a and 122a that are patterned on the first and second surfaces. Also, the seed layers 121 a and 122a and the plating layers 121 b and 122b form the terminals C11, C12, C13, C21, C22, and C23 of the first and second conductive patterns 121 and 122. Each of the terminals C11, C12, C13, C21, C22, and C23 may have an individualized shape by the patterned seed layers 121 a and 122a and the plating layers 121b and 122b. For example, gold plating may be performed, and the plurality of terminals C11, C12, C13, C21, C22, and C23 including the plating layers 121b and 122b of a gold material stacked on the seed layers 121 a and 122a of a copper material may be formed.

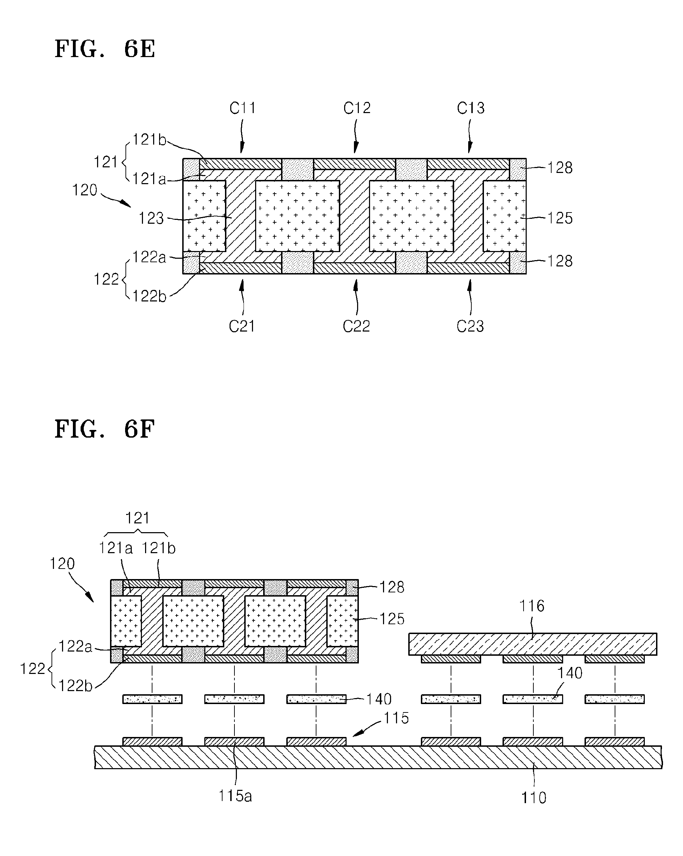

Next, as shown in FIG. 6E, the insulating coating layer 128 is selectively formed between the terminals C11, C12, C13, C21, C22, and C23 of the first and second conductive patterns 121 and 122. For example, the insulating coating layer 128 may be formed on the first and second surfaces other than areas for the terminals C11, C12, C13, C21, C22, and C23. The insulating coating layer 128 may be coated by pattern printing such as screen printing. According to another embodiment of the present invention, the insulating coating layer 128 may be formed by the process illustrated in FIG. 6C, i.e., between patterning of the first and second metal layers 121' and 122' of FIG. 6B, and the plating process illustrated in FIG. 6D.

Next, as shown in FIG. 6F, the second PCB 120 is disposed on the terminal region 115 of the first PCB 110, and the soldering materials are disposed between the second PCB 120 and the terminal region 115 of the first PCB 110. The soldering materials 140 may be disposed between the second conductive pattern 122 of the second PBC 120 and the electrode pad 115a of the first PCB 110. In the soldering process, which will be performed later, attaching the first PCB 110 and the electrical devices 116 may be simultaneously performed with attaching the first and second PCBs 110 and 120, and in this regard, the second PCB 120 and the electrical devices 116 may be placed together by disposing the soldering materials 140 on the first PCB 110 in the current process.

Next, the soldering may be performed to attach the first and second PCBs 110 and 120 to each other. For example, the soldering may be performed by reflow soldering, and the soldering materials 140 may be heated to a high temperature, and thus the first and second PCBs 110 and 120 may be attached to each other by having the melted or semi-melted soldering materials 140 as medium. Here, the electrical devices 116 disposed on the first PCB 110 may also be attached by the soldering at the same time.

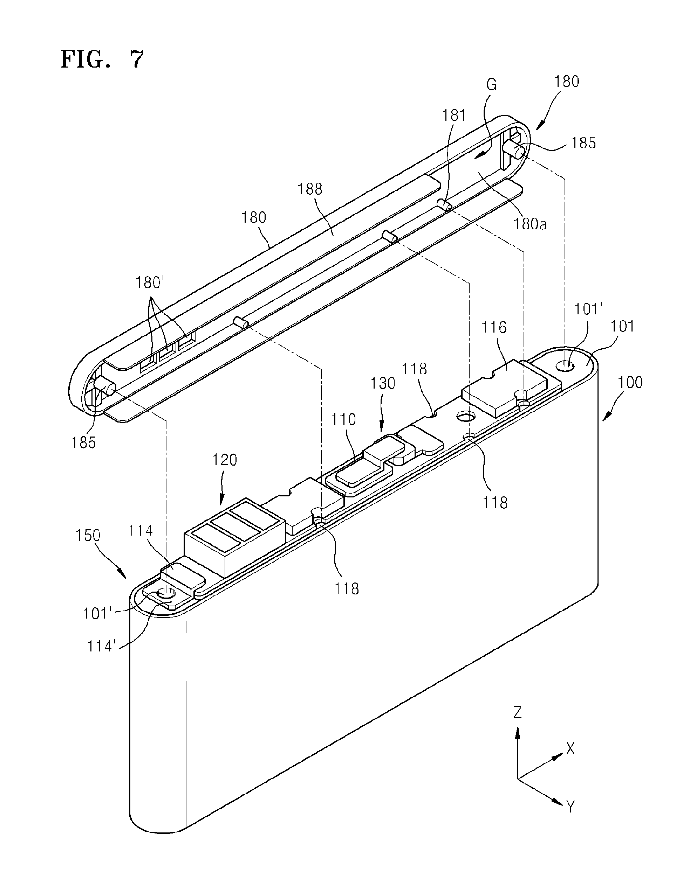

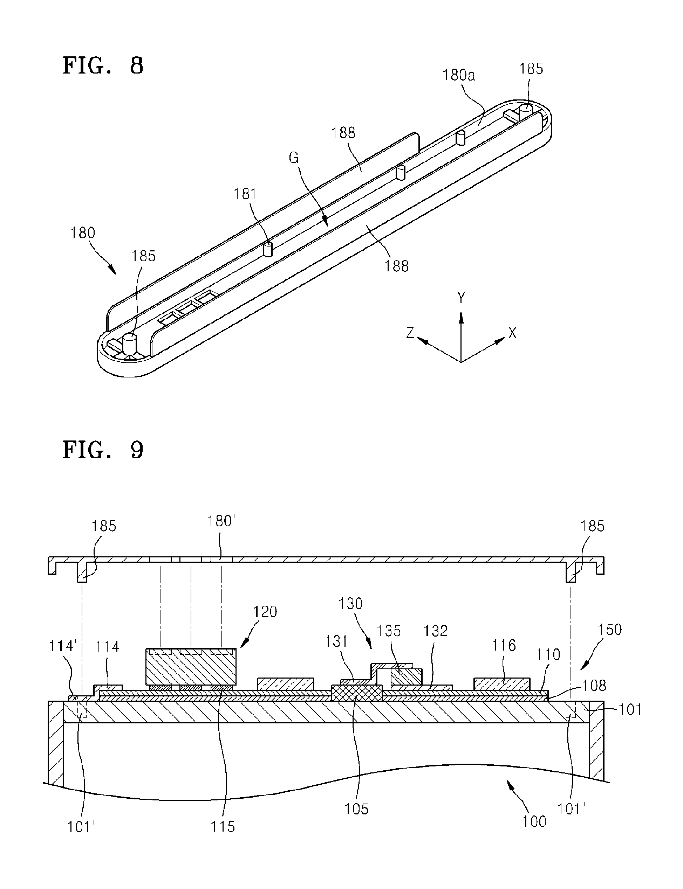

FIG. 7 illustrates a perspective view that shows an assembly status of the upper cover 180 and the protective circuit module 150, and FIG. 8 illustrates a perspective view of the upper cover 180 shown in FIG. 7. Also, FIG. 9 illustrates a cross-section structure of the view shown in FIG.7. Hereinafter, an assembly structure between the upper cover 180 and the PCM 150 will be described with reference to FIGS. 7 through 9.

Referring to FIGS. 7 through 9, the upper cover 180 is assembled onto the PCM 150 so as to accommodate the PCM 150 mounted on the bare cell 100. An accommodation portion G having a concave shape to accommodate the PCM 150 may be provided in the upper cover 180. The upper cover 180 may include assembly ribs 181 that are protruded downwardly facing the PCM 150 to be inserted in assembly opening 118 of the PCM 150. As the assembly ribs 181 are inserted to the assembly openings of the PCM 150, an assembly location of the upper cover 180 may be regulated, and the upper cover 180 may be fixed at the location. That is, the location of the upper cover 180 may be aligned with respect to the PCM 150 that is integrated with the bare cell 110 by insert-fixing the assembly ribs 181 and the assembly openings 118, and thus the upper cover 180 may not be seceded from its regular position.

The assembly ribs 181 may be formed on a side-wall defining the accommodation portion G of the upper cover 180 and may be inwardly protruded facing the accommodation portion G. For example, the assembly ribs 181 may be formed at predetermined locations along a longitudinal side (in a x-direction) of the upper cover 180, which is shaped almost like a rectangular box. The assembly ribs 181 may be formed in pairs, where one of the assembly ribs 181 faces its pair on the opposite longitudinal side of the upper cover 180. The paired assembly ribs 181 facing each other may be formed inwardly protruding on the side-walls of the upper cover 180.

The assembly ribs 181 may be provided at many parts along the longitudinal sides (in a x-direction) of the upper cover 180. For example, the assembly ribs 181 may be formed at locations at both sides near a center of the upper cover 180.

The assembly openings 118 may be formed in the PCM 150 at locations corresponding to the assembly ribs 181. This means that a projection of the assembly openings 118 to the plane in which the assembly ribs 181 are located (along a perpendicular axis) partially (preferably completely) overlap with the assembly ribs 181.

In particular, the assembly openings 118 may be formed in the first PCB 110. The assembly openings 181 may be formed on a side-wall of the first PCB 110 and may have a shape that is opened along a leading-in concave shape of the side of the first PCB 110. That is, the assembly openings 118 may have a shape having at least one part that is opened and not a closed hole-shape, where its circumference is all surrounded by the side of the first PCB 110.

For example, when the first PCB 110 is formed in a shape almost like a rectangular box, the assembly openings 118 may be formed at predetermined locations along longitudinal sides (in a x-direction). In particular, many of the assembly openings 118 may be provided at many parts along the longitudinal sides (in a x-direction) of the upper cover 180. For example, the assembly openings 118 at the locations may limit a width of the first PCB 110 to be narrow, thus the assembly openings 118 may be formed by using spare space according to a detailed design of the first PCB 110. Alternatively, the assembly openings 118 may also be formed in the electrical devices 116 mounted on the first PCB 110. For example, the assembly openings 118 may be formed in pairs, where the assembly openings 118 of each pair face each other along the longitudinal sides (in a x-direction). The assembly openings 118 act as chin rests with respect to the assembly ribs 181 of the upper cover 180, and thus the assembly location of the upper cover 180 may be regulated, and secession of the upper cover 180 may be prevented.

The binding protrusions 185 may be formed on the upper cover 180. The binding protrusions 185 form binding with the bare cell 110 and may be assembled by being inserted to the binding grooves 101' formed in the bare cell 110. For example, the binding protrusions 185 may be formed in a pair located at both longitudinal ends (x-direction). The binding protrusions 185 may be pressed into the binding grooves 101' formed in the bare cell 100, and as the binding protrusions 185 and the binding grooves 101' forced to fit each other, the upper cover 180 and the bare cell 100 may be firmly attached to each other. The binding grooves 101' may be formed in the cap plate 101 of the bare cell 100 at locations corresponding to the binding protrusions 185, for example, at both longitudinal ends (x-direction) of the cap plate 101. This means that a projection of the binding grooves 101' to the plane in which the binding protrusions 185 are located (along a perpendicular axis) partially (preferably completely) overlap with the binding protrusions 185.

As shown in FIG. 9, the binding grooves 101' may be formed in a downwardly leading-in concave groove shape without penetrating the cap plate 101, and the bare cell 100 sealed by using the cap plate 101 may not affect insulation.

The binding protrusions 185 and the binding grooves 101' are for attaching the upper cover 180 and the bare cell 100, but as they are fixed through the PCM 150 placed between the upper cover 180 and the bare cell 100, a location of the PCM 150 may also be fixed. That is, as shown in FIG. 7, the connection member 114 that is extended from the first PCB 110 is placed at an end of the cap plate 101, and the through-hole 114' is formed in the connection member 114. In addition, as one of the binding protrusions 185 of the upper cover 180 fit into one of the binding grooves 101' of the cap plate 101 via the through-hole 114' of the connection member 114, the PCM 150 may be fixed by using the connection member 114.

In FIG. 7, a reference number 188 indicates a skirt portion 188 formed along a circumference of the upper cover 180. The skirt portion 188 forms a protruding part of the upper cover 180 to cover side walls of the bare cell 100. The skirt portion 188 of the upper cover 180 positioned to overlap the side walls of the bare cell 100 and surfaces of the bare cell 100 are adhered to each other by being surrounded together with a label sheet (not shown), and thus the upper cover 180 may be firmly fixed on the bare cell 100.

While the present invention has been particularly shown and described with reference to exemplary embodiments thereof, it will be understood by those of ordinary skill in the art that various changes in form and details may be made therein without departing from the spirit and scope of the present invention as defined by the following claims.

### <Explanation of Reference numerals designating the Major Elements of the Drawings>

| | |
|---|---|
| 100: a bare cell | 101: a cap plate |
| 101: binding grooves | 105: an electrode terminal |
| 108: an insulation tape | 110: a first PCB |
| 110a: a first surface of the first PCB | 110b: a second surface of the first PCB |
| 111: an insulting substrate of the first PCB | 114: a connection member |
| 114': a through-hole of the connection member | 115: a terminal region |
| 115a: an electrode pad | 116: electrical devices |
| 118: assembly openings | 120: a second PCB |
| 120a: a first surface of the second PCB | 120b: a second surface of the second PCB |
| 121: a first conductive pattern | 121 a, 122a: a seed layer |
| 121b, 122b: a plating layer | 122: a second conductive pattern |
| 121': a second conductive layer | 122': a second conductive layer |
| 123: a connection pattern | 125: an insulating substrate |
| 130: a PCT device | 131: a first lead member |
| 132: a second lead member | 135: a variable resistor |
| 140: soldering materials | 150: a protective circuit module |
| 180: an upper cover | 180': an open pattern |
| 181: assembly ribs | 185: binding protrusions |
| 188: a skirt portion | |
| C11, C12, C13: a terminal of the first conductive pattern | |
| C21, C22, C23: a terminal of the second conductive pattern | |
| G: an accommodation portion of the upper cover | |
| VH: via holes of the insulating substrate | |

## Claims

1. A rechargeable battery comprising:
a bare cell (100),
a housing (20, 101, 180) adapted for enclosing the bare cell (100); and
a protective circuit module (150) disposed between the bare cell (100) and the housing (180), and comprising a first printed circuit board (110) which includes at least one electrical device (116, 130),
**characterized in that**
a second printed circuit board (120) is disposed between the first printed circuit board (110) and a side of the housing (180) at which the first printed circuit board (110) is located.

2. The rechargeable battery of claim 1, wherein the first printed circuit board (110) and the second printed circuit board (120) are electrically connected to each other by a soldering joint (140) and wherein the second printed circuit board (120) and the first printed circuit board (110) directly contact the soldering joint (140).

3. The rechargeable battery according to any one of the preceding claims, wherein the housing (20, 101) comprises a case (20), a cap plate (101) and an upper cover (180) having an accommodation portion adapted to accommodate the protective circuit module (150), wherein the bare cell (100) is accommodated inside a space which is formed by the case (20) and the cap plate (101), and the protective circuit module (150) is arranged between the cap plate (101) and the upper cover (180).

4. The rechargeable battery according to any one of the preceding claims, wherein the second printed circuit board (120) comprises an external connection terminal (121, C11, C12, C13) that allows electrical connection with an external device.

5. The rechargeable battery according to any one of the preceding claims, wherein the second printed circuit board (120) comprises an insulating substrate (125);
a first conductive pattern (121) formed on a first surface of the insulating substrate (125); a second conductive pattern (122) formed on a second surface of the insulating substrate (125); and a connection pattern (123) which is formed in via holes (VH) of the insulating substrate (125), wherein the connection pattern (123) electrically connects the first conductive pattern (121) and second conductive pattern (122).

6. The rechargeable battery according to claim 5, wherein the first conductive pattern (121) protrudes from the first surface of the insulating substrate (125) and an insulating coating layer (128) is formed between adjacent protrusions of the first conductive pattern (121); and/or wherein the second conductive pattern (122) protrudes from the second surface of the insulating substrate (125) and an insulating coating layer (128) is formed between adjacent protrusions of the second conductive pattern (122).

7. The rechargeable battery according to claim 6, wherein the first conductive pattern (121) and the insulating coating layer (128) form a planar outer surface on the first surface of the insulating substrate (125); and/or wherein the second conductive pattern (122) and the insulating coating layer (128) form a planar outer surface on the second surface of the insulating substrate (125).

8. The rechargeable battery according to any one of claims 4 to 7, wherein the first printed circuit board (110) comprises an insulation substrate (111) on which the at least one electrical device (116, 130) is located, and an insulation layer (108) formed of a insulating material is arranged between the cap plate (101) and the insulating substrate (111) of the first printed circuit board (110).

9. The rechargeable battery according to any one of claims 5 to 8, wherein the insulating substrate (111) of the first printed circuit board (110) and/or the insulating substrate (125) of the second printed circuit board (120) is formed of a flexible material.

10. The rechargeable battery according to any one of claims 5 to 9, wherein the first conductive pattern (121) and/or the second conductive pattern (122) each comprises at least a first metal layer (121 a, 122a) and a second metal layer (121 b, 122b) that are stacked on each other, wherein the first metal layer (121 a, 122a) and the second metal layer (121 b, 122b) are formed of different materials.

11. The rechargeable battery according to claim 10, wherein the first metal layer (121 a, 122a) is formed of the same material as the connection pattern (123).

12. The rechargeable battery according to any one of the preceding claims, wherein the first printed circuit board (110) is a single-sided printed circuit board; and/or wherein the second printed circuit board (120) is a double-sided printed circuit board which comprises a conductive pattern (121, 122) on both surfaces of the printed circuit board.

13. The rechargeable battery according to any one of the preceding claims, wherein the conductive pattern (121) of the second printed circuit board (120) protrudes with a first height (h1) from the insulation substrate (111) of the first printed circuit board (110), wherein the first height (h1) is greater than a second height (h2) which is a maximum protrusion distance of the at least one electrical device (116, 130) from the insulation substrate (111) of the first printed circuit board (110).

14. The rechargeable battery according to any of claims 3 to 13, wherein the upper cover (180) comprises at least one assembly rib (181) and the protective circuit module (150) comprises at least one assembly opening (118), wherein the at least one assembly rib (181) protrudes towards the protective circuit module (150) and the at least one assembly rib (181) is inserted in the at least one assembly opening (118).

15. The rechargeable battery according to any of claims 3 to 14, wherein the upper cover (180) comprises at least one binding protrusion (185) and the bare cell (110) comprises at least one binding groove (101'), wherein the at least one binding protrusion (185) is inserted in the at least one binding groove (101').

## Amended claims

### Amended claims in accordance with Rule 137(2) EPC.

**1.** A rechargeable battery comprising:
a bare cell (100),
a housing (20, 101, 180) adapted for enclosing the bare cell (100); and
a protective circuit module (150) disposed between the bare cell (100) and the housing (180), and comprising a first printed circuit board (110) which includes at least one electrical device (116, 130),
**characterized in that**
a second printed circuit board (120) is disposed between the first printed circuit board (110) and an outer side of the housing (180) at which the first printed circuit board (110) is located.

**2.** The rechargeable battery of claim 1, wherein the first printed circuit board (110) and the second printed circuit board (120) are electrically connected to each other by a soldering joint (140) and wherein the second printed circuit board (120) and the first printed circuit board (110) directly contact the soldering joint (140).

**3.** The rechargeable battery according to any one of the preceding claims, wherein the housing (20, 101) comprises a case (20), a cap plate (101) and an upper cover (180) having an accommodation portion adapted to accommodate the protective circuit module (150), wherein the bare cell (100) is accommodated inside a space which is formed by the case (20) and the cap plate (101), and the protective circuit module (150) is arranged between the cap plate (101) and the upper cover (180).

**4.** The rechargeable battery according to any one of the preceding claims, wherein the second printed circuit board (120) comprises an external connection terminal (121, C11, C12, C13) that allows electrical connection with an external device.

**5.** The rechargeable battery according to any one of the preceding claims, wherein the second printed circuit board (120) comprises an insulating substrate (125); a first conductive pattern (121) formed on a first surface of the insulating substrate (125); a second conductive pattern (122) formed on a second surface of the insulating substrate (125); and a connection pattern (123) which is formed in via holes (VH) of the insulating substrate (125), wherein the connection pattern (123) electrically connects the first conductive pattern (121) and second conductive pattern (122).

**6.** The rechargeable battery according to claim 5, wherein the first conductive pattern (121) protrudes from the first surface of the insulating substrate (125) and an insulating coating layer (128) is formed between adjacent protrusions of the first conductive pattern (121); and/or wherein the second conductive pattern (122) protrudes from the second surface of the insulating substrate (125) and an insulating coating layer (128) is formed between adjacent protrusions of the second conductive pattern (122).

**7.** The rechargeable battery according to claim 6, wherein the first conductive pattern (121) and the insulating coating layer (128) form a planar outer surface on the first surface of the insulating substrate (125); and/or wherein the second conductive pattern (122) and the insulating coating layer (128) form a planar outer surface on the second surface of the insulating substrate (125).

**8.** The rechargeable battery according to any one of claims 4 to 7, wherein the first printed circuit board (110) comprises an insulation substrate (111) on which the at least one electrical device (116, 130) is located, and an insulation layer (108) formed of a insulating material is arranged between the cap plate (101) and the insulating substrate (111) of the first printed circuit board (110).

**9.** The rechargeable battery according to any one of claims 5 to 8, wherein the insulating substrate (111) of the first printed circuit board (110) and/or the insulating substrate (125) of the second printed circuit board (120) is formed of a flexible material.

**10.** The rechargeable battery according to any one of claims 5 to 9, wherein the first conductive pattern (121) and/or the second conductive pattern (122) each comprises at least a first metal layer (121a, 122a) and a second metal layer (121b, 122b) that are stacked on each other, wherein the first metal layer (121a, 122a) and the second metal layer (121b, 122b) are formed of different materials.

**11.** The rechargeable battery according to claim 10, wherein the first metal layer (121 a, 122a) is formed of the same material as the connection pattern (123).

**12.** The rechargeable battery according to any one of the preceding claims, wherein the first printed circuit board (110) is a single-sided printed circuit board; and/or wherein the second printed circuit board (120) is a double-sided printed circuit board which comprises a conductive pattern (121, 122) on both surfaces of the printed circuit board.

**13.** The rechargeable battery according to any one of the preceding claims, wherein the conductive pattern (121) of the second printed circuit board (120) protrudes with a first height (h1) from the insulation substrate (111) of the first printed circuit board (110), wherein the first height (h1) is greater than a second height (h2) which is a maximum protrusion distance of the at least one electrical device (116, 130) from the insulation substrate (111) of the first printed circuit board (110).

**14.** The rechargeable battery according to any of claims 3 to 13, wherein the upper cover (180) comprises at least one assembly rib (181) and the protective circuit module (150) comprises at least one assembly opening (118), wherein the at least one assembly rib (181) protrudes towards the protective circuit module (150) and the at least one assembly rib (181) is inserted in the at least one assembly opening (118).

**15.** The rechargeable battery according to any of claims 3 to 14, wherein the upper cover (180) comprises at least one binding protrusion (185) and the bare cell (110) comprises at least one binding groove (101'), wherein the at least one binding protrusion (185) is inserted in the at least one binding groove (101').
